# EUROPEAN PATENT APPLICATION

(11) **EP 1 956 672 A1**
(43) Date of publication of application: **13.08.2008**
(21) Application number: 07425058.0
(22) Date of filing: 02.02.2007
(51) Int. Cl.: H01M 8/04, H01M 8/06

(54) **Fuel cell electric generator having an integrated metal hydride storage system**

(71) Applicant: Electro Power Systems S.p.A., 10091 Alpignano (IT)
(72) Inventor: Cherchi, Pierpaolo, 10141 Torino (IT); Borello, Luisa, 10093 Collegno (IT); Musso, Andrea, 10095 Grugliasco (IT); Gianolio, Giuseppe, 14010 Cellarengo (IT); Rosso, Ilaria, 10064 Pinerolo (IT)
(74) Representative: Jorio, Paolo

(57) **Abstract**

Hydrogen-fed fuel cells electric generator (1) having an integrated system for the storage of hydrogen in the shape of metal hydrides, comprising a stack (FC) of hydrogen-feedable fuel cells, a unit (MHU) for the storage of hydrogen in the shape of metal hydrides, a cooling circuit (2) flown across by a thermo-carrier fluid and hydraulically provided in series with means (R) of dissipation of thermal energy carried by the thermo-carrier fluid, at least a first branch (3) of which is hydraulically connected in series with the storage unit. The electric generator further comprises means for hydraulically connecting in series the stack with at least a second branch (4) of the cooling circuit; and a hydrogen feed circuit (5) comprising first means for hydraulically connecting said storage unit and said stack, and second means for hydraulically connecting an external source of hydrogen to, selectively, said storage unit only, and said first means.

## Description

The present invention refers to a fuel cell electric generator wherein a plurality of fuel cells are piled into a stack to generate electricity by being supplied a combustible gas and an oxidising gas, on a fuel electrode (anode) and an oxidation electrode (cathode) respectively.

In particular, the present invention refers to a fuel cell electric generator wherein the hydrogen to be fed to fuel cells is stored in the shape of metal hydrides.

Fuel cells represent one of the most technologically promising solutions for the use of hydrogen as an energy vector. They are devices capable of converting chemical energy into electric energy, by taking advantage of an electrochemical reaction whose product is non polluting; e.g., in the case of hydrogen-supplied fuel cells, it is water.

The use of fuel cells is characterized by high efficiency, versatility and virtually null environmental impact.

Certain aspects of the present invention are particularly, but not exclusively, referred to a fuel cell electric generator which employs proton exchange membrane (PEM) cells and which utilises hydrogen as the fuel.

In a single PEM cell there take place simultaneously two hemi-reactions, at the anode and at the cathode respectively. Anode and cathode of a PEM fuel cell are separated by an electrolyte, typically consisting of a membrane of a sulphonated polymer capable of conducting protons, whose opposite sides are coated with a layer of a suitable catalytic mixture (e.g. Pt-based).

The electrolyte is generally saturated with a ionic transportation fluid (e.g. water) so that hydrogen ions can travel thereacross from anode to cathode.

At the anode, then, there is supplied hydrogen which diffuses within the catalytic layer and there dissociates into hydrogen ions and electrons, according to the hemi-reaction equation:

(1) 2H₂ → 4H⁺ + 4e⁻

Electrons, to which the membrane is impermeable, travel along an external electric circuit towards the cathode, thereby generating an electric current and the corresponding voltage.

At the cathode there is supplied an oxidant, generally oxygen or a gaseous mixture containing oxygen (e.g. air) which reacts with the hydrogen ions which have travelled across the electrolyte and the electrons coming from the external electric circuit to form water, according to the hemi-reaction equation:

(2) O₂ + 4H⁺ + 4e⁻ → 2H₂O

This reaction is generally also catalytically assisted, e.g. by Pt.

The resulting overall reaction is consequently:

(3) 2H₂ + O₂ → 2H₂O

which comes with the development of heat and electric energy.

A well defined maximum voltage is associated with this electrochemical reaction. In order to achieve higher voltages, a plurality of elements are connected in series to form a stack. It is also possible to use different stacks connected in series.

A fuel cell electric generator of the above type needs a source of hydrogen; the latter is generally stored in pressurised vessels, or in the liquid form. Recently, as an alternative to conventional storage methodologies, there has been catching on the use of metal hydrides, which is advantageous because hydrogen can be stored at room temperature, in a smaller volume and at significantly lower pressures. Therefore, they constitute a safer and more compact storage form. Further, the hydrogen they release has high purity and it can be supplied directly to fuel cells.

The release of hydrogen is an endothermic reaction, according to the following equation:

(4) MH + heat → M + H

wherein with M reference is made to a generic metal or metallic alloy, and therefore it demands a suppli of energy in the shape of a thermal flow at a well defined temperature. On the other hand, the absorption of hydrogen is an exothermic phenomenon, therefore in the phase of recharging a unit for the storage of hydrogen in the shape of metallic hydrides, heat must be removed from the above unit so as to favour absorption.

The amount of heat to supply and remove, during desorption and absorption respectively, depends upon the type of metallic alloy employed.

It is known to use the heat developed by the fuel cell stack to heat up the metal hydride storage unit to favour the release of hydrogen.

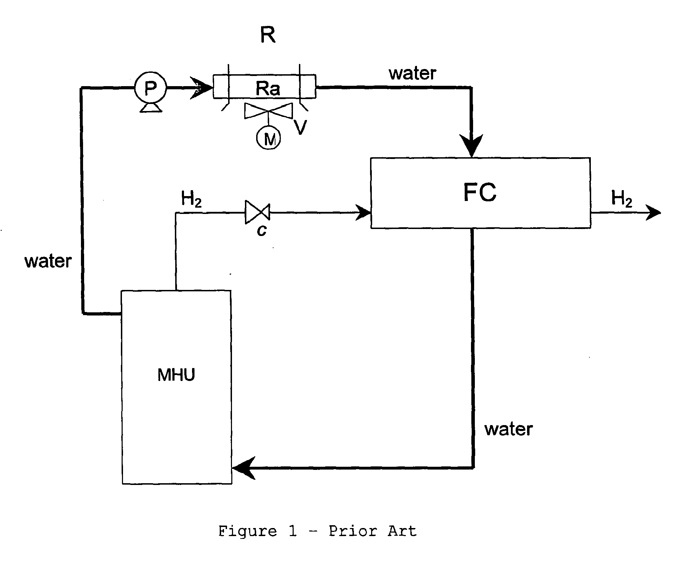

Figure 1 shows a schematic view describing the integration of the hydraulic circuit of the fuel cell stack (FC) and the metal hydride storage unit (MHU), whilst the stack FC is being operated, in a fuel cell electric generator according to the prior art. A hydrogen supply line also connects the MHU to the stack FC.

Hydrogen coming from the metal hydride unit is supplied to the stack FC while in operation. Stack FC, beside electric power, generates heat that is removed by means of a water cooling circuit so as to maintain the FC temperature approximately constant and comprised in the range 65÷85°C. The heat removed from the stack can be used to favour the release of hydrogen from the MHU. Therefore, water coming from the stack FC is sent to the MHU, wherein it yields to the metal hydrides the heat necessary to release hydrogen, so that the temperature of water is lowered. Next, water is sent back to the stack FC. In case the heat yielded to the MHU is not enough to balance the heat generated within the stack FC, there can be provided auxiliary means R of heat dissipation of a known type that may be used to remove the excess heat.

The ensemble of hydraulic circuit (pump, piping, dissipators, etc.), gaseous currents feed and discharge circuit (hydrogen feed piping, air feed piping, etc.), control system (control unit, temperature, flow and pressure gauges, actuators, etc.) constitute the remaining part of the fuel cell generator, to which reference will be made in the following as BoP (i.e. "Balance of Plant").

In order to cool the metal hydride storage unit during recharge, it is generally necessary that it be removed from the system and/or that a specific cooling system be provided, or however that the BoP of the system be conveniently modified.

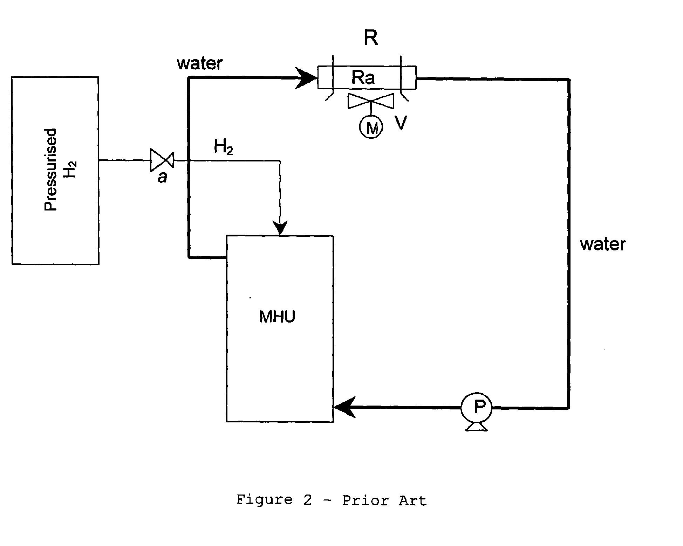

Figure 2 shows a schematic view describing a possible mode of cooling the MHU during the recharge phase, according to the prior art. From a source of pressurised hydrogen (e.g. a 200 bar cylinder) there is supplied hydrogen to the MHU. A flow of cold water, moved by means of a pump P, is sent to the MHU, from which it removes the heat developed whilst hydrogen is being absorbed. Next, it is sent to a dissipator R, optionally provided with a fan V, wherein it is cooled to be sent again to the MHU.

The removal of the storage unit for the recharge phase is a lengthy and complex operation, which becomes particularly disadvantageous if such an operation needs to be repeated often. On the other hand, to provide for the possibility of modifying the BoP of the entire generator every time recharging the metal hydride storage unit becomes necessary involves a significant complication of the apparatus and higher costs.

Further, interrupting the stack operation to carry out the recharge of the storage unit proves disadvantageous, particularly when the fuel cell generator is used as a back-up system in case of power failure. The time autonomy of the generator depends in fact upon the load capacity of the hydrogen storage unit, which can contain an amount of hydrogen sufficient e.g. for 4 hours of steady operation of the stack. In the absence of other interventions, at the end of that period of time, the generator can no longer work and it is necessary to recharge the storage unit. As a consequence, if the damage that has caused the failure has not been repaired, the back-up generator has as a matter of fact served its function only partially and in a non-efficient manner.

It is possible to increase the time autonomy of the fuel cell generator used as a back-up system e.g. by employing a hydrogen storage unit with a lager capacity. However, this solution entails an undesired and disadvantageous of the overall volume of the generator and of manufacturing costs. Further, it represents only a temporary solution of the issue or, in other words, it is tantamount to postponing the problem.

It is an object of the present invention to provide a fuel cell electric generator having an integrated metal hydride storage unit that can overcome the drawbacks described above. More particularly, it is an object of the present invention to provide a fuel cell electric generator wherein the recharge of the metal hydride storage unit can be performed without necessarily interrupting the stack operation. Further, it is an object of the present invention to provide a fuel cell electric generator wherein during a phase of recharging the storage unit it is not necessary to remove the latter, nor to modify the BoP of the system.

The invention refers therefore to a fuel cell electric generator according to claim 1.

In particular, according to the present invention, there is provided a fuel cell electric generator comprising:
- a stack of fuel cells that can be supplied with hydrogen;
- a unit for the storage of hydrogen in the shape of metal hydrides;
- a cooling circuit flown across by a thermo-carrier fluid and hydraulically provided in series with means of dissipation of thermal energy carried by the thermo-carrier fluid, at least a first branch of which is hydraulically connected in series with the storage unit;
- means for hydraulically connecting in series the stack with at least a second branch of the cooling circuit; and
- a hydrogen feed circuit comprising first means for hydraulically connecting the storage unit to the stack, and second means for hydraulically connecting an external source of hydrogen to, selectively, said storage unit only, and said first means.

According to another aspect of the present invention, there is provided a method of managing an electric generator of the type comprising a unit for the storage of hydrogen in the shape of metal hydrides and a stack of fuel cells supplied with the hydrogen of the storage unit, comprising:
- a step of producing electric energy by means of the stack through supply to the latter of a flow of hydrogen;
- a step of recharging the storage unit during which the content in hydrogen of the storage unit that might have been consumed during the step of producing electric power is restored through absorption from an external source of pressurised hydrogen;
- said step of recharging comprising the step of hydraulically connecting, in an adjustable manner, said external source of pressurised hydrogen, selectively, to the storage unit only and to both said storage unit and said stack, without removing the storage unit itself from the generator, to supply the storage unit, in a controlled manner, with at least a first portion of said flow of hydrogen taken from the external source and, if that is the case, to feed, simultaneously with the recharge step, a second portion of the flow of hydrogen from the external source to the stack, so that said recharge step can be carried out simultaneously with the step of producing electric power.

During the step of producing electric power, the method further comprises a step of cooling consisting of circulating a thermo-carrier fluid in a hydraulic circuit that travels in series across the stack and the storage unit, so as to remove thermal energy from the storage unit and the stack and to dissipate it.

To this end, the thermo-carrier fluid is advantageously circulated through means of thermal energy dissipation arranged in series along said cooling circuit immediately downstream or upstream with respect to said stack, with reference to a direction of circulation of said thermo-carrier fluid in said hydraulic circuit. Preferably, the stack is arranged upstream with respect to the dissipation means, which, in their turn, are preferably arranged upstream with respect to the storage unit MHU.

Further characteristics and advantages of the present invention will become apparent from the following description of an embodiment thereof given with reference to the figures of the attached drawings, wherein:
Figure 1 is a schematic view showing a stack of fuel cells and its metal hydride storage unit whilst the FC is being operated, in a fuel cell electric generator according to the prior art;
Figure 2 is a schematic view showing one possible mode of cooling the metal hydride storage unit of a fuel cell generator according to the prior art during the recharge step; and
Figure 3 is a schematic view showing the general lay-out of a fuel cell electric generator manufactured according to the present invention.

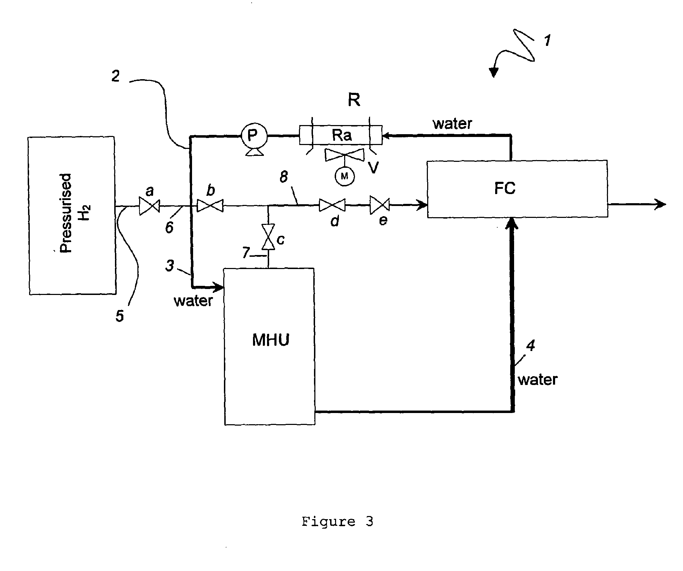

With reference to figure 3 there is indicated in its entirety with 1 a fuel cell electric generator comprising a stack FC that can be fed with hydrogen and a metal hydride storage unit MHU connected by a hydraulic circuit 2 for the circulation, in the way that will be described, of a thermo-carrier fluid between the stack FC and the storage unit MHU. There is further provided according to the present invention a hydrogen feed circuit 5 suitable for connecting, in the way that will be described, an external source of pressurised hydrogen to the storage unit MHU and/or to the generator stack FC.

According to the present invention, the hydrogen feed circuit 5 comprises:
- a first branch 6 on which there are provided valve means *a*, *b* suitable for adjusting the flow exiting the source of pressurised hydrogen;
- a second branch 7 suitable for hydraulically connecting the MHU to the source of pressurised hydrogen through the first branch 6, and to a third branch 8 in its turn hydraulically connected in series to the stack FC; the third branch 8 is provided with valve means *d, e* suitable for adjusting the flow entering the stack FC.

Valve means *a* and *e* may be e.g. pressure reducing valves, while *b* and *d* may be e.g. valves of the manually activated type or controlled by an adequate control system (obvious for the skilled in the art and therefore not shown for the sake of conciseness). On the branch 7 there can be optionally provided a further valve *c* e.g. in case the MHU is not provided per se with its own insulation valve. Valve *b* on branch 6 may also be a check valve.

Thus branches 7 and 8 of the hydrogen feed circuit, together with valve means *c, d, e,* come to constitute first means for hydraulically connecting the storage unit MHU and the FC. Similarly, branch 6 of the hydrogen feed circuit 5 and valve means *a* and *b* come to constitute second means for hydraulically connecting an external source of hydrogen to, selectively, the storage unit only, and the above first means.

The hydraulic circuit 2 comprises: a first branch 3 hydraulically connecting in series first means R of thermal energy dissipation, of a known type (e.g. a dissipator Ra, optionally provided with a fan V operated by an engine M) to the storage unit, in the following referred to for the sake of conciseness also by its acronym MHU; and a second branch 4, hydraulically connecting in series the MHU to the stack FC (referred to for the sake of conciseness also by its acronym FC) and to the first dissipation means R.

In the following, the terms "upstream" ed "downstream" must be intended to be referred to the direction of circulation of the thermo-carrier fluid in the hydraulic circuit 2, shown by the arrows in figure 3.

In a first operation mode of the fuel cell electric generator according to the present invention, FC produces electric power by receiving hydrogen from the MHU through branches 7 and 8 of the hydrogen feed circuit 5. In the meantime, along the cooling circuit 2 there is circulated a thermo-carrier fluid, e.g. water; consequently, said water, during this operation mode, exits the FC heated by the heat developed in association with the electrochemical reaction described above. Next, water yields the heat accumulated partly to first means R of thermal energy dissipation and partly to the MHU, thus favouring in the latter the release of hydrogen to be fed to FC.

During of step of recharging the MHU only - i.e. without simultaneous generation of electric power - hydrogen is normally fed from the external source to the MHU through branches 6 and 7 of the hydrogen feed circuit 5, and the cooling circuit 2 is used in such a way that water fed to the MHU exits from the latter heated only by the heat developed by hydrogen absorption (which is e.g. of the order of 100 W every 150 1 of hydrogen absorbed/desorbed). Subsequently, water is sent, in series, to the dissipation means R and to the stack FC. Thus water yields the heat accumulated to the first dissipation means R and to the stack FC, thereby being cooled. Water, whose initial temperature is thus substantially restored, can be fed back to the MHU for the cooling of the latter. In this step, therefore, the stack FC, which is not working to produce electric power, is used as an ensemble of means of thermal energy dissipation, in aid of dissipation means R.

In a second operation mode of the fuel cell electric generator according to the present invention, instead, the MHU is recharged while the FC is working, that is without interrupting the electric power generation. Therefore, a flow of hydrogen from the source of pressurised hydrogen is sent to both MHU (through branches 6 and 7 of the hydrogen feed circuit 5) and to FC (through branches 6 and 8 of the hydrogen feed circuit 5). In the hydraulic circuit 2, consequently, water removes both the hydrogen absorption heat from the MHU and the heat associated with the electrochemical reaction from FC. This accumulated heat, the entity of which depends upon the overall hydrogen flow fed from the source of pressurised hydrogen and upon how it is split between MHU and FC, is then globally yielded to the dissipation means R: in this operation mode also fan V is preferably activated, so as to maximise the heat dissipation.

It will appear to the skilled in the art that this operation mode generally is associated with the maximum thermal load to be dissipated through the dissipation means R. That must be accounted for when designing and sizing dissipator Ra and fan V.

In a further operation mode of the fuel cell electric generator according to the present invention, hydrogen is fed to the stack only from the external source of pressurised hydrogen, through branches 6 and 8 of the hydrogen feed circuit 5. Under these conditions, consequently, in the hydraulic circuit 2, the thermo-carrier fluid removes the heat produced by the stack during electric power generation, while the storage unit MHU acts basically as dissipation means.

According to the present invention it is therefore possible to not remove the MHU from the system during the recharge-only step, thus rendering the procedure simpler and reducing the time needed for the operation. Above all, though, by operating in the second mode described above, it is possible to recharge the MHU without removing it from the system and to maintain at the same time the stack FC in operation, so that the production of electric power is not interrupted.

Advantageously, this allows a more efficient management of a fuel cell generator as a back-up electric power generator. If e.g. a failure interrupts the electric power supply to any user, an adequate safety system may set the fuel cell generator to work in the first operation mode described, wherein hydrogen is fed to FC from the MHU. An operator has then a time equivalent to that needed for the content of the MHU to be consumed to take action. In particular, the operator may connect to the system a cylinder of pressurised hydrogen, the content of which is fed simultaneously to the MHU to recharge it without removing it from the system and to FC for the production of electric power to supply the user with during the emergency.

Once the damage that caused the interruption of electric power supply to the user is repaired, it is possible e.g. to complete the MHU recharge with the stack non-working and subsequently to disconnect the cylinder of pressurised hydrogen.

## Claims

1. Fuel cell electric generator (1) comprising:
- a stack (FC) of hydrogen-feedable fuel cells;
- a unit (MHU) for the storage of hydrogen in the shape of metal hydrides;
- a cooling circuit (2) flown across by a thermo-carrier fluid and hydraulically provided in series with means (R) of dissipation of thermal energy carried by the thermo-carrier fluid, at least a first branch (3) of which is hydraulically connected in series with the storage unit (MHU);
**characterised in that** it further comprises:
- means for hydraulically connecting in series said stack with at least a second branch (4) of said cooling circuit; and
- a hydrogen feed circuit (5) comprising first means for hydraulically connecting the storage unit to the stack, and second means for hydraulically connecting an external source of hydrogen to, selectively, said storage unit only, and said first means.

2. Electric generator (1) according to claim 1, **characterised in that** said dissipation means (R) comprise a dissipator (Ra) and a fan (V).

3. Electric generator (1) according to any of the foregoing claims, **characterised in that** said fuel cells are of the proton-exchange membrane (PEM) type.

4. Electric generator (1) according to any of the foregoing claims, **characterised in that** said first means for hydraulically connecting said storage unit and said stack in said hydrogen feed circuit (5) comprise a first branch (7) and a second branch (8) of the hydrogen feed circuit (5) and first valve means (*c*, *d*, *e*) assembled along said first and second branches (7,8).

5. Electric generator (1) according to any of the foregoing claims, **characterised in that** said second means for hydraulically connecting said external source of hydrogen to, selectively, said storage unit (MHU) only, and said first means comprise a third branch (6) of said hydrogen feed circuit (5) and second valve means (*a*, *b*) assembled along said third branch (6).

6. Electric generator (1) according to claim 1, **characterised in that**, with respect to the direction of circulation of the thermo-carrier fluid, the stack (FC) is arranged upstream with respect to the first dissipation means, which, in their turn, are arranged upstream with respect to the storage unit (MHU).

7. A method of managing an electric generator of the type comprising a unit (MHU) for the storage of hydrogen in the shape of metal hydrides and a stack (FC) of fuel cells feedable with the hydrogen of the storage unit, comprising a step of producing electric power by means of the stack through supply to the latter of a flow of hydrogen, and a step of recharging the storage unit during which the content in hydrogen of the storage unit that might have been consumed during the step of producing electric power is restored through absorption from an external source of pressurised hydrogen; **characterised in that** said recharge step comprises the step hydraulically connecting, in an adjustable manner, said external source of pressurised hydrogen, selectively, to the storage unit only and to both said storage unit and said stack, without removing the storage unit itself from the generator, to supply the storage unit, in a controlled manner, with at least a first portion of said flow of hydrogen taken from the external source and, if that is the case, to feed, simultaneously with the recharge step, a second portion of the flow of hydrogen from the external source to the stack, so that said recharge step can be carried out simultaneously with the step of producing electric power.

8. A method according to claim 7, **characterised in that** it comprises, during the step of producing electric power and simultaneous recharge, a cooling step consisting of circulating a thermo-carrier fluid in a hydraulic circuit that flows across the stack and the storage unit, so as to remove thermal energy from the storage unit and the stack and to dissipate it.

9. A method according to claim 8, **characterised in that**, during said cooling step, said thermo-carrier fluid is circulated across means (R) of dissipation of thermal energy arranged in series along said hydraulic circuit immediately upstream or downstream with respect to said stack (FC), with reference to a direction of circulation of said thermo-carrier fluid in said hydraulic circuit; circuit; said stack (FC) being arranged upstream with respect to the dissipation means, which, in their turn, are arranged upstream with respect to the storage unit (MHU).
